# EUROPEAN PATENT SPECIFICATION

(11) **EP 2 418 190 B1**
(45) Date of publication and mention of the grant of the patent: **28.08.2013**
(21) Application number: 09001796.3
(22) Date of filing: 03.02.2009
(51) Int. Cl.: C07B 53/00

(54) **The method of preparation of enantiomerically enriched products of condensation from racemic acids or acids of the low enentiomeric purity**
Verfahren zur Herstellung von enantiomarisch angereicherten Kondensationsprodukten aus razernischen Säuren oder aus Säuren mit niedriger enantiomerischer Reinheit
La methode de la preparation de produits de condensation enrichi en enantiomeres applique des acides racemiques ou des acides de la proprete enantiomeric base

(30) Priority: 04.02.2008 PL 38437608
(43) Date of publication of application: 15.02.2012
(73) Proprietor: Politechnika Lódzka, 90-924 Lódz (PL)
(72) Inventor: Kolesinska, Beata, 93-575 Lódz (PL); Kaminski, Zbigniew J., 94-050 Lódz (PL)
(74) Representative: Kiciak, Krzysztof Boleslaw

(56) References cited:
- GREGORY C. FU: "Enantioselective Nucleophilic catalysis with "planar-chiral" heterocycles" ACCOUNTS OF CHEMICAL RESEARCH, vol. 33, no. 6, 2000, pages 412-420, XP002615272
- ZBIGNIEW J. KAMINSKY ET AL.: "N-Triazinylammonium tetrafluoroborates. A new generation of efficient coupling r eagents useful for peptide synthesis" THE JOURNAL OF THE AMERICAN SOCIETY, vol. 127, no. 48, 2005, pages 16912-16920, XP002615273

## Description

The subject matter of the invention is a method of obtaining enantiomerically enriched condensation products from racemic acids or acids of low enantiomeric purity which makes it possible to predict the configuration and enantiomeric purity of the condensation product.

In order to conduct an enantioselective process of condensation with the use of a racemic substrate or a substrate of low enantiomeric purity requires the presence of an optically active condensing reagent, catalyst or a chiral solvent.

The first attempts at enantiodifferentiating arylation, described in the journal Tetrahedron Letters, 22, 1109-1112 (1981), employed chiral derivatives of N-hydroximides, derived from N-tartaric acid. However, it was never possible to predict the configuration or optical purity of the product.

The journal Tetrahedron Letters, 38, 3751-3754 (1997) describes the application of chiral N,N-diacetylamines while Chemical and Pharmaceutical Bulletin46, 1217-1219 (1998) gives an account of the application of a chiral N,N-dibenzoylamine for acylation of racemic primary alkylarylamines. Despite relatively mild condensation conditions, the enantiomeric purity of the products thus obtained was not very good (ee 8-48%).

The application of N,N-diacyl derivatives in enantiodifferentiating acylation was also described in Tetrahedron Letters, 34, 5563 (1993). The application of the derivatives of N-benzoyloxazolidines for enantioselective synthesis of esters from racemic secondary alcohols makes it possible to obtain esters of high optical purity only if the reaction is conducted in conditions that are favorable to the mechanism of the reaction, where the stage of the addition of alcohol to the carbonyl group of the acylating reagent determines the speed of the whole process. In conditions favoring another reaction mechanism, the enantiomeric purity was worse. Furthermore, irrespective of the mechanism of the reaction, it was not possible to predict the purity or configuration of the preferred enantiomer in the reaction.

4-(N,N-dimethylamine)pyridine (DMAP) is one of the most frequently used catalysts in condensation reactions. In the presence of DMAP, the acylation reaction takes place through the creation of a quaternary acylpyridinium salt, which is a good donor of the acyl group.

The journal Journal of Organic Chemistry, 61, 430 (1996) describes the first study into the application of chiral DMAP analogues for kinetic separation, while a summary review of study results was published in Accounts of Chemical Research, 33, 412 (2000).

Due to the success in synthesis with the use of chiral DMAP analogues, further studies were undertaken in that direction. Journal of Organic Chemistry, 65, 3154-3159 (2000) gives an account of the modification of the original DMAP particle by the creation of an asymmetrically substituted 1-methyl-2-pyrroline[3,2-c]pyridine. However, despite a complex system of substituents, the resulting DMAP derivative turned out to be not very effective in the enantioselective acylation reaction of 1-(1-naphthyl)ethanol, which is shown in the low value of the Kagan coefficient s = 4.7.

Another group of compounds used in enantioselective acylation are bicyclic phosphines of the structure 2-phosphabicyclo[3.3.0]octane (PBO), described in the Journal of American Chemical Society, 121, 5813-5814 (1999). Their application in the kinetic separation of 1-(2,6-dimethylphenyl)ethanol made it possible to obtain extremely high values of the Kagan coefficient s = 370-390. Still, despite such high s values, it appeared that the possibilities of predicting the configuration and enantiomeric purity were limited.

In the Journal of the American Chemical Society, 120, 1269-1630 (1998), Journal of American Chemical Society, 121, 11638-11643 (1999) and Journal of Organic Chemistry, 63, 6784-6785 (1998), a group of peptides was described which contained in the N-terminal position 3-(1-imidazoylo)-(S)-alanine (LA) or 7(Me)histidine (Pmh), which were able to effectively kinetically separate secondary alcohols. The best peptide catalysts selected by means of combinatory chemistry made it possible to obtain quite advantageous enantiomeric surplus, but their use was basically limited to structures analogous to the substrates used in the process of catalyst selection from the compound library.
The Journal of Organic Chemistry, 63, 4248-4255 (2001) gives an account of the use of chiral chlorides N-(1,3,5-triazine-1-yl)ammonium obtained *in situ* in enantiodifferentiating synthesis with the use of racemic substrates, which make it possible to obtain enantiomerically enriched products. N-(2,4,6-triazine-1-yl)ammonia chlorides are unstable, and thus the process of their obtaining *in situ* significantly hampers the reproducibility of results.

The Journal of the American Society; 127(48); 16912-16920 (2005) describes the use of achiral N-(2,4,6-triazine-1-yl)ammonium tetrafluoroborates in peptide synthesis in the liquid and solid phase and in the synthesis of esters and carboxylic acid anhydrates only from optically homogeneous substrates. The use of racemic substrates in synthesis with achiral N-(2,4,6-triazine-1-yl)ammonium tetrafluoroborates leads to obtaining racemic products.

The method of obtaining enantiomerically enriched condensation products from racemic acids or acids of low enantiomeric purity which consists of subjecting a racemic acid or an acid of low enantiomeric purity to the action of a condensing reagent in an organic solvent, which is favourable at a lowered temperature, and then subjecting it to condensation with a nucleophilic component, especially an amine, alcohol, or amino acid, according to the invention, is characterised by the fact that the condensing reagent used is one of the following: chiral N-triazinylammonium tetrafluoroborate of the formula 1, 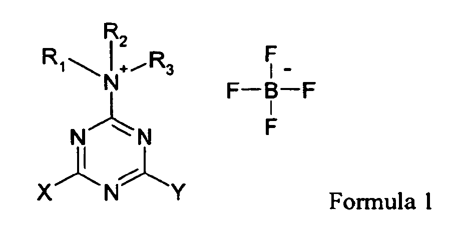 chiral N-triazinylammonium bistetrafluoroborate of the formula 2, 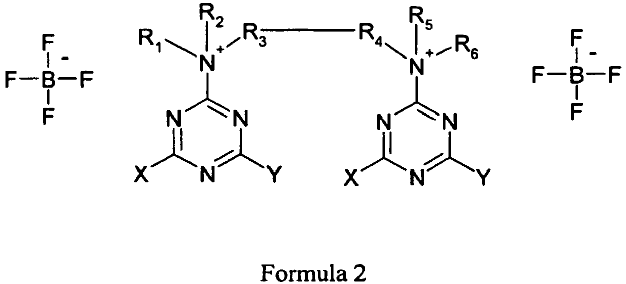 chiral N-triazinylammonium oligotetrafluoroborate of the formula 3, 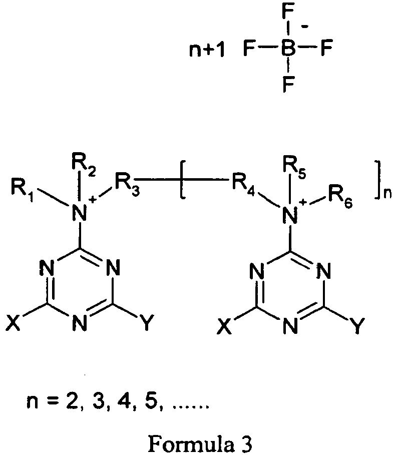 a favourably chiral tetrafluoroborate of the formula 1, or chiral bistetrafluoroborate of the formula 2, where X, Y signify mutually independent substituents: alkoxy substituent; alkoxy, aryloxy substituent; aryloxy, heteroaryloxy, alkylamine substituent; alkylamine, dialkylamine substituent; alkylamine substituent; dialkylamine, arylamine substituent; arylamine or a heterocyclic group substituent; NR₁R₂R₃ substituent means a fragment derived from a chiral tertiary amine, where R₁, R₂, R₃ signify mutually independent substituted or non-substituted alkyl, cycloalkyl, bicycloalkyl, heterocyclic, aryl, heteroaryl group; N₁R₂R₃R₄R₅R₆ substituent means a fragment derived from a chiral tertiary diamine, where R₁R₂R₃R₄R₅R₆ signify mutually independent substituted or non-substituted alkyl, cycloalkyl, bicycloalkyl, heterocyclic, aryl, heteroaryl group, and n refers to the degree of oligomerization and n≥2. The acid is used in molar quantities larger than the molar quantity of the condensing reagent. The acid is subject to the action of the condensing reagent in the presence of a catalytic quantity of a tertiary amine - a favourably chiral tertiary amine of the type that was used in the synthesis of the condensing reagent.

The invented method is useful from the point of view of preparations, makes use of easily available and cheap reagents and available stable chiral N-(2,4,6-triazine-1-yl)ammonium tetrafluoroborate. The method is effective with the use of a wide range of stable chiral N-(2,4,6-triazine-1-yl)ammonium tetrafluoroborates. The tetrafluoroborates used in the invented method as condensing agents have a double advantage: they are like triazinylammonium chlorides in that they make it possible to obtain significant enantiomeric enrichment while N-(2,4,6-triazine-1-yl)ammonium tetrafluoroborates are highly stable and enable reproducible condensation results. The condensing reagent used in the invented method makes it possible to conduct a stereodifferentiating process of the acid component at a stage preceding the condensation reaction proper. A particularly valuable advantage of the use of stable chiral N-(2,4,6-triazine-1-yl)ammonium tetrafluoroborates is the possibility to predict the configuration and enantiomeric purity of the condensation product on the basis of the results of practically any model reaction. Moreover, due to the fact that the chiral auxiliaries depart after the stage of enantiodifferentiating activation of the acid component, the subsequent stages of the reaction take place through active intermediary products, identical to those obtained in the case of using an achiral condensing reagent. This makes it possible to predict the range of usability of the chiral condensing reagent in all the cases in which the range is known due to experiments with the use of achiral tetrafluoroborate forming identical reactive intermediary products. This fact constitutes a great advantage of the invented method over other methods in which known enantiodifferentiating condensing reagents are used, as the presence of a chiral amine released as a side effect during the condensation has little effect on the configuration, efficiency and purity of the condensation product.

The object-matter of the invention is illustrated by following examples, which will not limit of its range.

### Example I.

The intensively stirred suspension of strychnine tetrafluoroborate (4.22 g, 10 mmol) and sodium bicarbonate (1.26 g, 15 mmol) in acetonitrile (20 mL) was cooled to 0°C then treated with 2-chloro-4,6-dimethoxy-1,3,5-triazine (CDMT) (1.75, 10 mmol). Stirring and cooling was continued and progress of reaction was monitored by TLC using 4-(4'-nitrobenzyl)pyridine (NBP) for visualization until all CDMT was consumed. The solid precipitate was filtered, washed with acetonitrile and combined filtrates were evaporated to dryness. The solid residue was crystallized from acetonitrile / diethyl ether affording 4.32 g of chiral tetrafluoroborate, a compound presented on formula 1 and labeled as DMT·× strychnine × BF₄.

The intensively stirred solution of 0.56 g (1 mmol) of DMT × strychnine × BF₄⁻ salt in 5 ml CH₃CN was cooled on water-ice bad and then treated with 0.45 g (2 mmol) *rac*-Z-Ala-OH and 32 mg (0.25 mmola) diisopropyloethyloamine. Stirring was continued for 15 min then 0.22 g (1 mmol) HCl × Phe-OMe and 0.11 ml (1 mmol) N-methylmorpholine was added and stirring was continued at room temperature overnight.
Obtained 0.34 g, yield 89%, of Z-Ala-L-Phe-OMe as diastereomeric mixture DL/LL = 90 /10 as determined based on the diagnostic signals in ¹H-NMR (CD₃COCD₃): δ = 1.26 DL, 1.31 LL (d, 3H, J=7.5 Hz, CH₃-CH-) [ppm].

### Example II.

The intensively stirred solution of 0.56 g (1 mmol) ofDMT × strychnine × BF₄ salt in 5 ml CH₃CN was cooled on water-ice bad and then treated with 0.45 g (2 mmol) *rac*-Z-Ala-OH and 32 mg (0.25 mmola) diisopropyloethyloamine. Stirring was continued for 15 min then 0.22 g (1 mmol) HCl × Phe-OMe and 0.11 ml (1 mmol) N-methylmorpholine was added and stirring was continued at room temperature overnight.
Obtained 0.33 g, yield = 87% of Z-Ala-L-Phe-OMe as mixture of diastereomers DL/LL = 96/4 as it has been determined based on the diagnostic signals in ¹H-NMR (CD₃COCD₃): δ = 1.27 DL, 1.33 LL (d, 3H, J=7.5 Hz, CH₃-CH-) [ppm].

### Example III.

The intensively stirred solution of 0.56 g (1 mmol) of DMT × strychnine × BF₄⁻ salt in 5 ml CH₂Cl₂ was cooled on water-ice bad and then treated with 0.45 g (2 mmol) *rac*-Z-Ala-OH and 32 mg (0.25 mmol) diisopropyloethyloamine. Stirring was continued for 15 min then 0.22 g (1 mmol) HCl × Phe-OMe and 0.11 ml (1 mmol) N-methylmorpholine was added and stirring was continued at room temperature overnight.
Obtained 0.36 g, yield = 93% of Z-Ala-L-Phe-OMe as mixture of diastereomers DL/LL = 88/12 as it has been determined based on the diagnostic signals in ¹H-NMR (CD₃COCD₃): δ = 1.27 DL, 1.32 LL (d, 3H, J=7.5 Hz, CH₃-CH-)

### Example IV.

The intensively stirred solution of 0.56 g (1 mmol) of DMT × strychnine × BF₄ salt in 5 ml CH₂Cl₂ was cooled on water-ice bad and then treated with 0.45 g (2 mmol) *rac*-Z-Ala-OH and 84 mg (0.25 mmol) strychnine. Stirring was continued for 15 min then 0.22 g (1 mmol) HCl × Phe-OMe and 0.11 ml (1 mmol) N-methylmorpholine was added and stirring was continued at room temperature overnight.
Obtained 0.35 g, yield = 90% of Z-Ala-L-Phe-OMe as mixture of diastereomers DL/LL = 88/12 as it has been determined based on the diagnostic signals in ¹H-NMR (CD₃COCD₃): δ = 1.27 DL, 1.32 LL (d, 3H, J=7.5 Hz, CH₃-CH-)

### Example V.

The intensively stirred solution of 0.56 g (1 mmol) ofDMT × strychnine × BF₄⁻ salt in 5 ml CH₃CN was cooled on water-ice bad and then treated with 0.62 g (2 mmol) *rac*-Fmoc-Ala-OH and 32 mg (0.25 mmola) diisopropyloethyloamine. Stirring was continued for 15 min then 0.22 g (1 mmol) HCl × Phe-OMe and 0.11 ml (1 mmol) N-methylmorpholine was added and stirring was continued at room temperature overnight.
Obtained 0.41 g, yield = 87% of Fmoc-Ala-L-Phe-OMe as mixture of diastereomers DL/LL = 95/4 as it has been determined based on the diagnostic signals in ¹H-NMR (CD₃COCD₃): δ = 1.25 DL, 1.32 LL (d, 3H, J=6.5 Hz, CH₃-CH-) [ppm].

### Example VI.

The intensively stirred solution of 0.56 g (1 mmol) ofDMT × strychnine × BF₄⁻ salt in 5 ml CH₃CN was cooled on water-ice bad and then treated with 0.62 g (2 mmol) *rac*-Fmoc-Ala-OH and 84 mg (0.25 mmola) strychnine. Stirring was continued for 15 min then 0.22 g (1 mmol) HCl × Phe-OMe and 0.11 ml (1 mmol) N-methylmorpholine was added and stirring was continued at room temperature overnight.
Obtained 0.39 g, yield = 82% of Fmoc-Ala-L-Phe-OMe as mixture of diastereomers DL/LL = 100/0 as it has been determined based on the diagnostic signals in ¹H-NMR (CD₃COCD₃): δ = 1.26 DL, 1.35 LL (d, 3H, J=6.5 Hz, CH₃-CH-) [ppm].

### Example VII.

The intensively stirred solution of 0.56 g (1 mmol) of DMT × strychnine × BF₄⁻ salt in 5 ml CH₃CN was cooled on water-ice bad and then treated with 0.60 g (2 mmol) *rac*-Z-Phe-OH and 32 mg (0.25 mmola) diisopropyloethyloamine. Stirring was continued for 15 min then 0.14 g (1 mmol) HCl × Ala-OMe and 0.11 ml (1 mmol) N-methylmorpholine was added and stirring was continued at room temperature overnight.
Obtained 0.33 g, yield = 85% of Z-Phe-L-Ala-OMe as mixture of diastereomers DL/LL = 15/85.

### Example VIII.

The intensively stirred solution of 0.56 g (1 mmol) of DMT × strychnine × BF₄⁻ salt in 5 ml CH₃CN was cooled on water-ice bad and then treated with 0.60 g (2 mmol) *rac*-Z-Phe-OH and 84 mg (0.25 mmola) strychnine. Stirring was continued for 15 min then 0.14 g (1 mmol) HCl × Ala-OMe and 0.11 ml (1 mmol) N-methylmorpholine was added and stirring was continued at room temperature overnight.
Obtained 0.31 g, yield = 81% of Z-Phe-L-Ala-OMe as mixture of diastereomers DL/LL = 10/90.

### Example IX.

The intensively stirred solution of 0.56 g (1 mmol) of DMT × strychnine × BF₄⁻ salt in 5 ml CH₃CN was cooled on water-ice bad and then treated with 0.45 g (2 mmol) *rac*-Z-Ala-OH and 84 mg (0.25 mmola) strychnine. Stirring was continued for 15 min then 0.073 g (1 mmol) *n*-butylamine (CH₃CH₂CH₂CH₂NH₂) and stirring was continued at room temperature overnight. Obtained 0.24 g, yield = 87% of Z-Ala-NH-(CH₂)₃CH₃ as mixture of enantiomers D/L = 95/5.

### Example X.

The intensively stirred solution of 0.56 g (1 mmol) of DMT × strychnine × BF₄⁻ salt in 5 ml CH₃CN was cooled on water-ice bad and then treated with 0.45 g (2 mmol) *rac*-Z-Ala-OH and 84 mg (0.25 mmola) strychnine. Stirring was continued for 15 min then 0.099 g (1 mmol) cyclohexylamine and then stirring was continued at room temperature overnight. Obtained 0.26 g, yield = 85% of Z-Ala-NH-c-C₆H₁₁ as mixture of enantiomers D/L = 97/3.

### Example XI.

The intensively stirred solution of 0.56 g (1 mmol) of DMT × strychnine × BF₄⁻ salt in 5 ml CH₃CN was cooled on water-ice bad and then treated with 0.33 g (2 mmol) *rac*-2-phenylbutyric acid and 84 mg (0.25 mmola) strychnine. Stirring was continued for 15 min then 0.093 g (1 mmol) aniline and stirring was continued at room temperature overnight. Obtained 0.14 g, yield = 52% of 2-phenylbutyric acid anilide as mixture of enantiomers R/S = 80/20.

### Example XII.

The intensively stirred solution of 0.56 g (1 mmol) of DMT × strychnine × BF₄⁻ salt in 5 ml CH₃CN was cooled on water-ice bad and then treated with 0.33 g (2 mmol) *rac*-2-phenylbutyric acid and 84 mg (0.25 mmola) strychnine. Stirring was continued for 15 min then 0.099 g (1 mmol) cyclohexylamine and stirring was continued at room temperature overnight. Obtained 0.17 g, yield = 69% of 2-phenylbutyric acid N-cyclohexylamide as mixture of enantiomers R/S = 90/10.

### Example XIII.

The intensively stirred solution of 0.56 g (1 mmol) ofDMT × strychnine × BF₄⁻ salt in 5 ml CH₃CN was cooled on water-ice bad and then treated with 0.45 g (2 mmol) *rac*-Z-Ala-OH and 84 mg (0.25 mmola) strychnine. Stirring was continued for 15 min then reacting mixture was concentrated to the half of the volume and 0.5 mL methanole was added. Stirring was continued at room temperature overnight. Obtained 0.27 g, yield = 87% of Z-Ala-OCH₃ as mixture of enantiomers D/L = 95/5.

### Example XIV.

The intensively stirred solution of 0.56 g (1 mmol) ofDMT × strychnine × BF₄ salt in 5 ml CH₃CN was cooled on water-ice bad and then treated with 0.45 g (2 mmol) scalemicZ-Ala-OH (composition D/L = 55/45) and 84 mg (0.25 mmola) strychnine. Stirring was continued for 15 min then 0.22 g (1 mmol) of HCl×H-Phe-OCH₃ and 0.11 mL (1 mmol) M-methylmorpholine were added. Stirring was continued at room temperature overnight. Obtained 0.33 g, yield = 86% of Z-Ala-L-Phe-OCH₃ as mixture of diastereomers DL/LL = 98/2 as it has been determined based on the diagnostic signals in ¹H-NMR (CD₃COCD₃): δ = 1.27 DL, 1.33 LL (d, 3H, J=7.5 Hz, CH₃-CH-) [ppm].

### Example XV.

The intensively stirred solution of 0.56 g (1 mmol) of DMT × strychnine × BF₄⁻ salt in 5 ml CH₃CN was cooled on water-ice bad and then treated with 0.33 g (2 mmol) scalemic 2-phenylbutyric acid (R/S = 55/45) and 84 mg (0.25 mmola) strychnine. Stirring was continued for 15 min then 0.099 g (1 mmol) cyclohexylamine and stirring was continued at room temperature overnight.
Obtained 0.18 g, yield = 80% of 2-phenylbutyric acid N-cyclohexylamide as mixture of enantiomers R/S = 95/5.

### Example XVI.

The intensively stirred solution of 5.6 g (10 mmol) of DMT × strychnine × BF₄⁻ salt in 50 ml CH₃CN was cooled on water-ice bad and then treated with 6.57 g (40 mmol) *rac-2-*phenylbutyric acid then after 30 min 1.1 mL (10 mmol) ofN-methylmorpholine was added. and 84 mg (0.25 mmola) strychnine. Stirring was continued for 15 min then the solvent was removed and the remaining residue was dissolved in dichloromethane then washed successively with 1M aq. HCl, water, 1M aq. NaHCO₃, again water dried with MgSO₄, filtered and filtrate was concentrated under reduced pressure. The residue was dried under vacuum with KOH an P₂O₅.
Obtained 2.96 g, yield = 95% of mezo-anhydride of 2-phenylbutyric acid.
¹H NMR (CDCl₃): δ = 0.90 (dt, 2×3H, J=7.5 Hz, CH₃-); 1.77-1.86 (m, 2H, -CH₂-); 2.03-2.13 (m, 2H, -CH₂-); 3.45 (t, 2×1H, J=7.5 Hz, -CH-); 7.12-7.34 (m, 10H, C₆H₅) [ppm].
IR (CCl₄): 1788 (C=O, strong) [cm⁻¹].

### Example XVII.

The intensively stirred solution of 5.6 g (10 mmol) of DMT × strychnine × BF₄⁻ salt in 50 ml CH₃CN was cooled on water-ice bad and then treated with 5.77 g (40 mmol) *rac*-2-ethylhexanoic acid then after 30 min 1.1 mL (10 mmol) ofN-methylmorpholine was added, stirring was continued for 15 min then the solvent was removed and the product was isolated as described in example XVI.
Obtained 2.30 g, yield = 85% of mezo-anhydride of 2-ethylhexanoic acid as oil.
¹H NMR (CDCl₃): δ = 0.86-0.99 (m, 12 H, CH₃-); 1.28-1.34 (m, 8H, -CH₂-); 1.51-1.66 (m, 8H, -CH₂-); 2.26-2.39 (m, 2H, -CH-) [ppm].
IR (CCl₄): 1794 (C=O, m) [cm⁻¹].

### Example XVIII.

The intensively stirred suspension of brucine tetrafluoroborate (4.82 g, 10 mmol) and sodium bicarbonate (1.26 g, 15 mmol) in acetonitrile (20 mL) was cooled to 0°C then treated with 2-chloro-4,6-dimethoxy-1,3,5-triazine (CDMT) (1.75, 10 mmol). Stirring and cooling was continued and progress of reaction was monitored by TLC using 4-(4'-nitrobenzyl)pyridine (NBP) for visualization until all CDMT was consumed. The solid precipitate was filtered, washed with acetonitrile and combined filtrates were evaporated to dryness. The solid residue was crystallized from acetonitrile / diethyl ether affording 4.40 g of chiral tetrafluoroborate, a compound presented on formula 1 and labeled as DMT·× brucine × BF₄.
The intensively stirred solution of 0.62 g (1 mmol) of DMT × brucine × BF₄⁻ salt in 5 ml CH₃CN was cooled on water-ice bad and then treated with 0.45 g (2 mmol) *rac*-Z-Ala-OH and 32 mg (0.25 mmola) diisopropyloethyloamine. Stirring was continued for 15 min then 0.22 g (1 mmol) HCl × Phe-OMe and 0.11 ml (1 mmol) N-methylmorpholine was added and stirring was continued at room temperature overnight.
Obtained 0.35 g, yield 91%, of Z-Ala-L-Phe-OMe as diastereomeric mixture DL/LL = 77 /23 as determined based on the diagnostic signals in ¹H-NMR (CD₃COCD₃): δ = 1.25 DL, 1.33 LL (d, 3H, J=7.5 Hz, CH₃-CH-) [ppm].

### Example XIX.

The intensively stirred solution of 0.56 g (1 mmol) of DMT × brucine × BF₄ salt in 5 ml CH₃CN was cooled on water-ice bad and then treated with 0.45 g (2 mmol) *rac*-Z-Ala-OH and 0.099 g (0.25 mmol) brucine. Stirring was continued for 15 min then 0.22 g (1 mmol) HCl × H-Phe-OMe and 0.11 mL (1 mmol) N-methylmorpholine was added and stirring was continued at room temperature overnight.
Obtained 0.34 g, yield = 88% of Z-Ala-L-Phe-OMe as mixture of diastereomers DL/LL = 80/20 as it has been determined based on the diagnostic signals in ¹H-NMR (CD₃COCD₃): δ = 1.28 DL, 1.34 LL (d, 3H, J=7.5 Hz, CH₃-CH-)

### Example XX.

The intensively stirred suspension of strychnine tetrafluoroborate (4.22 g, 10 mmol) and sodium bicarbonate (1.26 g, 15 mmol) in acetonitrile (20 mL) was cooled to 0°C then treated with solution of 3.28 g (10 mmol) 2-chloro-4,6-dibenzyloxy-1,3,5-triazine (CDBT) in CH₃CN (20 mL). Stirring and cooling was continued and progress of reaction was monitored by TLC using 4-(4'-nitrobenzyl)pyridine (NBP) for visualization until all CDBT was consumed. The solid precipitate was filtered, washed with acetonitrile and combined filtrates were evaporated to dryness. The solid residue was crystallized from acetonitrile / diethyl ether affording 4.99 g (yield 70%) of chiral tetrafluoroborate, a compound presented on formula 1 and labeled as DBT·× strychnine × BF₄.
The intensively stirred solution of 0.71 g (1 mmol) of DBT × strychnine × BF₄⁻ salt in 5 ml CH₃CN was cooled on water-ice bad and then treated with 0.45 g (2 mmol) *rac*-Z-Ala-OH and 0.084 g (0.25 mmola) strychnine. Stirring was continued for 15 min then 0.14 g (1 mmol) HCl × H-Gly-OEt and 0.11 ml (1 mmol) N-methylmorpholine was added and stirring was continued at room temperature overnight.
Obtained 0.27 g, yield 88%, of Z-Ala-Gly-OEt as enantiomeric mixture D/L = 75 /25.

### Example XXI

The intensively stirred suspension of brucine tetrafluoroborate (4.82 g, 10 mmol) and sodium bicarbonate (1.26 g, 15 mmol) in acetonitrile (20 mL) was cooled to 0°C then treated with solution of 3.28 g (10 mmol) 2-chloro-4,6-dibenzyloxy-1,3,5-triazine (CDBT) in CH₃CN (20 mL). Stirring and cooling was continued and progress of reaction was monitored by TLC using 4-(4'-nitrobenzyl)pyridine (NBP) for visualization until all CDBT was consumed. The solid precipitate was filtered, washed with acetonitrile and combined filtrates were evaporated to dryness. The solid residue was crystallized from acetonitrile / diethyl ether affording 6.11 g (yield 79%) of chiral tetrafluoroborate, a compound presented on formula 1 and labeled as DBT·× brucine × BF₄.
The intensively stirred solution of 0.77 g (1 mmol) of DBT × brucine × BF₄ salt in 5 ml CH₃CN was cooled on water-ice bad and then treated with 0.45 g (2 mmol) *rac*-Z-Ala-OH and 0.099 g (0.25 mmola) brucine. Stirring was continued for 15 min then 0.14 g (1 mmol) HCl × H-Gly-OEt and 0.11 ml (1 mmol) N-methylmorpholine was added and stirring was continued at room temperature overnight.
Obtained 0.26 g, yield 86%, of Z-Ala-Gly-OEt as enantiomeric mixture D/L = 90 /10.

### Example XXII.

The intensively stirred suspension of quinine tetrafluoroborate (4.12 g, 10 mmol) and sodium bicarbonate (1.26 g, 15 mmol) in acetonitrile (20 mL) was cooled to 0°C then treated with solution of 1.75 g (10 mmol) CDMT in CH₃CN (20 mL). Stirring and cooling was continued and progress of reaction was monitored by TLC using 4-(4'-nitrobenzyl)pyridine (NBP) for visualization until all CDMT was consumed. The solid precipitate was filtered, washed with acetonitrile and combined filtrates were evaporated to dryness yielding 3.69 g (yield 67%) of chiral tetrafluoroborate presented on formula 1 and labeled as DMT·× quinine × BF₄ as colorless oily residue.
The intensively stirred solution of 0.55 g (1 mmol) ofDMT × quinine × BF₄ salt in 5 ml CH₃CN was cooled on water-ice bad and then treated with 0.45 g (2 mmol) *rac*-Z-Ala-OH and 0.081 g (0.25 mmola) quinine. Stirring was continued for 15 min then 0.14 g (1 mmol) HCl × H-Gly-OEt and 0.11 ml (1 mmol) N-methylmorpholine was added and stirring was continued at room temperature overnight.
Obtained 0.27 g, yield 89%, of Z-Ala-Gly-OEt as enantiomeric mixture D/L = 85 /15.

### Example XXIII.

The intensively stirred suspension of quinidine tetrafluoroborate (4.12 g, 10 mmol) and sodium bicarbonate (1.26 g, 15 mmol) in acetonitrile (20 mL) was cooled to 0°C then treated with solution of 1.75 g (10 mmol) CDMT in CH₃CN (20 mL). Stirring and cooling was continued and progress of reaction was monitored by TLC using 4-(4'-nitrobenzyl)pyridine (NBP) for visualization until all CDMT was consumed. The solid precipitate was filtered, washed with acetonitrile and combined filtrates were evaporated to dryness yielding 3.53 g (yield 64%) of chiral tetrafluoroborate presented on formula 1 and labeled as DMT·× quinine × BF₄ as colorless oily residue.
The intensively stirred solution of 0.55 g (1 mmol) ofDMT × quinidine × BF₄ salt in 5 ml CH₃CN was cooled on water-ice bad and then treated with 0.45 g (2 mmol) *rac*-Z-Ala-OH and 0.081 g (0.25 mmola) quinidine. Stirring was continued for 15 min then 0.14 g (1 mmol) HCl × H-Gly-OEt and 0.11 ml (1 mmol) N-methylmorpholine was added and stirring was continued at room temperature overnight.
Obtained 0.26 g, yield 85%, of Z-Ala-Gly-OEt as enantiomeric mixture D/L = 2 /98.

### Example XXIV.

The intensively stirred suspension of quinine tetrafluoroborate (4.12 g, 10 mmol) and sodium bicarbonate (2.52 g, 30 mmol) in acetonitrile (20 mL) was cooled to 0°C then treated with solution of 3.50 g (20 mmol) CDMT in CH₃CN (40 mL). Stirring and cooling was continued and progress of reaction was monitored by TLC using 4-(4'-nitrobenzyl)pyridine (NBP) for visualization until all CDMT was consumed. The solid precipitate was filtered, washed with acetonitrile and combined filtrates were evaporated to dryness yielding 4.76 g (yield 61%) of chiral tetrafluoroborate presented on formula 2 and labeled as 2DMT·× quinine × 2BF₄ as colorless oily residue.
The intensively stirred solution of 0.78 g (1 mmol) of 2DMT × quinine × 2BF₄⁻ salt in 5 ml CH₃CN was cooled on water-ice bad and then treated with 0.45 g (2 mmol) *rac*-Z-Ala-OH and 0.081 g (0.25 mmola) quinine. Stirring was continued for 15 min then 0.14 g (1 mmol) HCl × H-Gly-OEt and 0.11 ml (1 mmol) N-methylmorpholine was added and stirring was continued at room temperature overnight.
Obtained 0.28 g, yield 91%, of Z-Ala-Gly-OEt as enantiomeric mixture D/L = 100 /0.

### Example XXV.

The intensively stirred suspension of quinidine tetrafluoroborate (4.12 g, 10 mmol) and sodium bicarbonate (2.52 g, 30 mmol) in acetonitrile (20 mL) was cooled to 0°C then treated with solution of 3.50 g (20 mmol) CDMT in CH₃CN (40 mL). Stirring and cooling was continued and progress of reaction was monitored by TLC using 4-(4'-nitrobenzyl)pyridine (NBP) for visualization until all CDMT was consumed. The solid precipitate was filtered, washed with acetonitrile and combined filtrates were evaporated to dryness yielding 4.92 g (yield 63%) of chiral tetrafluoroborate presented on formula 2 and labeled as 2DMT·× quinidine × 2BF₄ as colorless oily residue.
The intensively stirred solution of 0.78 g (1 mmol) of 2DMT × quinidine × 2BF₄⁻ salt in 5 ml CH₃CN was cooled on water-ice bad and then treated with 0.45 g (2 mmol) *rac*-Z-Aja-OH and 0.081 g (0.25 mmola) quinidine. Stirring was continued for 15 min then 0.14 g (1 mmol) HCl × H-Gly-OEt and 0.11 ml (1 mmol) N-methylmorpholine was added and stirring was continued at room temperature overnight.
Obtained 0.29 g, yield 93%, of Z-Ala-Gly-OEt as enantiomeric mixture D/L = 0.1 /99.9.

### Abbreviations used in examples:

Me - methyl group, Phe - phenylalanine, Gly - glycine, Ala - alanine, Et - ethyl group, Fmoc - fluorenylmethoxycarbonyl group, Z - benzyloxycarbonyl group, *rac -* racemic.

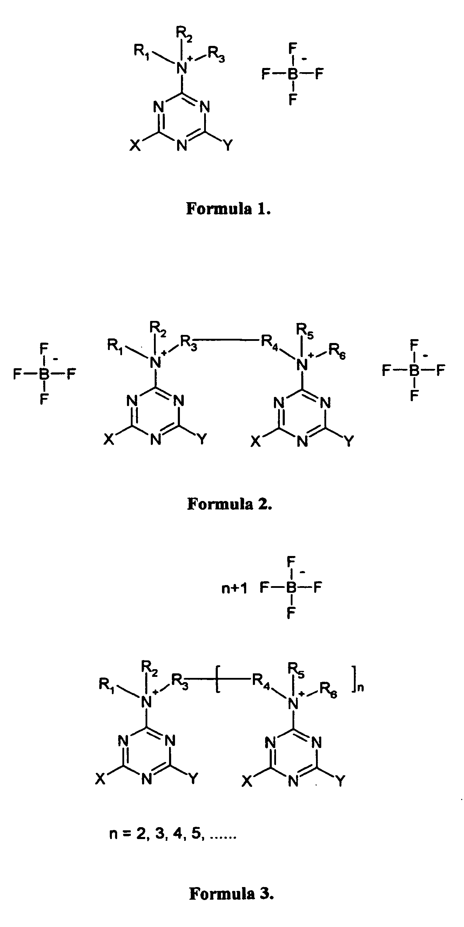

## Claims

1. A method of obtaining enantiomerically enriched condensation products from racemic acids or acids of low enantiomeric purity in which a racemic acid or an acid of low enantiomeric purity is reacted with a condensing reagent in an organic solvent, preferably at a lowered temperature, and then subjected to condensation with a nucleophilic component, especially with an amine, alcohol, or amino acid, **characterised in that** the condensing reagent used is one of the following:
- a chiral N-triazinylammonium tetrafluoroborate of formula 1 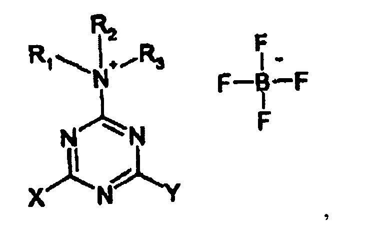
- a chiral N-triazinylammonium bistetrafluoroborate of formula 2 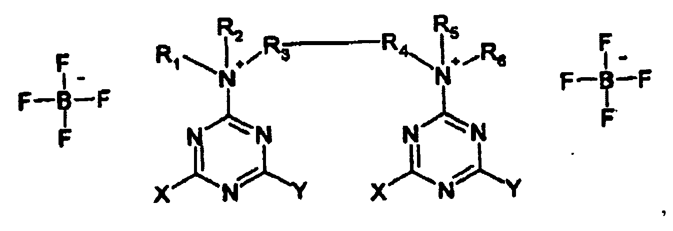 or
- chiral N-triazinylammonium oligotetrafluoroborate of formula 3 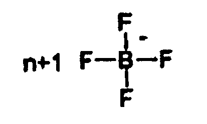 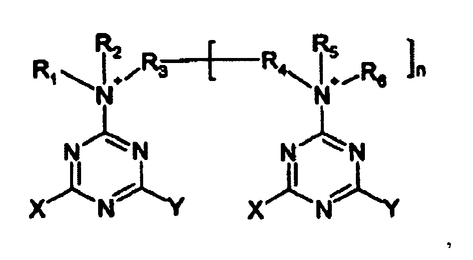
wherein
X and Y represent independently an alkoxy group, a substituted alkoxy group, an aryloxy group, a substituted aryloxy group, a heteroaryloxy group, an alkylamine group, a substituted alkylamine group, a dialkylamine group, a substituted dialkylamine group, an arylamine group, a substituted arylamine group or a heterocyclic group substituent; NR₁R₂R₃ substituent represents a fragment derived from a chiral tertiary amine, wherein R₁, R₂, R₃ represent independenty a substituted or unsubstituted alkyl, cycloalkyl, bicycloalkyl, heterocyclic, aryl or heteroaryl group;
N₁R₂R₃-R₄R₅R₆ substituent represents a fragment derived from a chiral tertiary diamine, wherein R₁, R₂, R₃, R₄, R₅, R₆ represent independently a substituted or unsubstituted alkyl, cycloalkyl, bicycloalkyl, heterocyclic, aryl or heteroaryl group, and n represents a degree of oligomerization and n≥2,
and wherein the acid is used in molar quantities larger than the molar quantity of the condensing reagent.

2. The method of claim 1, wherein the condensing reagent is a chiral tetrafluoroborate of formula 1 or chiral bistetrafluoroborate of formula 2,

3. The method of claim 1 or 2, wherein the racemic acid or an acid of low enantiomeric purity is reacted with a chiral condensing agent in the presence of a catalytic quantity of a tertiary amine.

4. The method of claim 3, wherein the tertiary amine is a chiral tertiary amine that was used in synthesis of the condensing reagent.

## Patentansprüche

1. Verfahren zur Gewinnung von enantiomerenangereicherten Kondensationsprodukten aus razemischen Säuren oder aus Säuren mit niedriger Enantiomerenreinheit, wobei eine razemische Säure oder eine Säure mit niedriger Enantiomerenreinheit mit einem Kondensationsreagenz in einem organischen Lösungsmittel, bevorzugt bei einer niedrigeren Temperatur, umgesetzt wird, und dann einer Kondensation mit einem nukleophilen Mittel, insbesondere mit einem Amin, Alkohol oder Aminosäure, unterworfen wird, **dadurch gekennzeichnet, dass** das verwendete Kondensationsreagenz eines der folgenden ist:
- ein chirales N-Triazinylammonium-tetrafluoroborat der Formel 1, 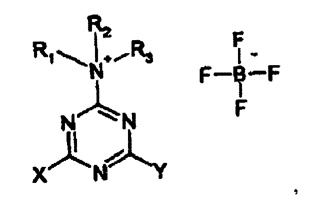
- ein chirales N-Triazinylammonium-bistetrafluoroborat der Formel 2, 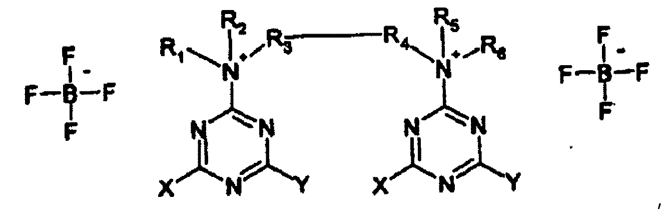 oder
- ein chirales N-Triazinylammonium-oligotetrafluoroborat der Formel 3, 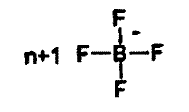 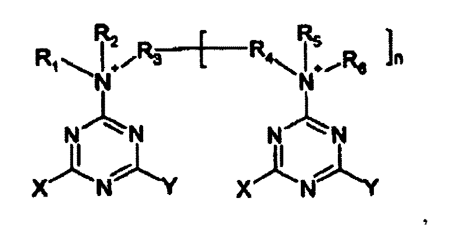
worin
X und Y unabhängig voneinander eine Alkoxygruppe, eine substituierte Alkoxygruppe, eine Aryloxygruppe, eine substituierte Aryloxygruppe, eine Heteroaryloxygruppe, eine Alkylamingruppe, eine substituierte Alkylamingruppe, eine Dialkylamingruppe, eine substituierte Dialkylamingruppe, eine Arylamingruppe, eine substituierte Arylamingruppe oder eine heterocyclische Gruppe darstellen;
Substituent NR₁R₂R₃ ein Fragment, das aus einem chiralen tertiären Amin abgeleitet ist, darstellt, wobei R₁, R₂, R₃ unabhängig voneinander eine substituierte oder unsubstituierte Alkyl-, Cycloalkyl-, Bicycloalkyl-, heterocyclische, Aryl- oder Heteroaryl-Gruppe darstellen; Substituent NR₁R₂R₃ - R₄R₅R₆ ein Fragment, das aus einem chiralen tertiären Diamin abgeleitet ist, darstellt, wobei R₁, R₂, R₃, R₄, R₅, R₆ unabhängig voneinander eine substituierte oder unsubstituierte Alkyl-, Cycloalkyl-, Bicycloalkyl-, heterocyclische, Aryl- oder Heteroaryl-Gruppe darstellen; und n den Oligomerisationsgrad darstellt; und n≥2,
und wobei die Säure in molaren Mengen größer als die molare Menge an dem Kondensationsreagenz eingesetzt wird.

2. Verfahren gemäß Anspruch 1, wobei das Kondensationsreagenz ein chirales Tetrafluoroborat der Formel 1 oder ein chirales Bistetrafluoroborat der Formel 2 ist.

3. Verfahren gemäß Anspruch 1 oder 2, wobei die razemische Säure oder die Säure mit niedriger Enantiomerenreinheit mit einem chiralen Kondensationsreagenz in Anwesenheit einer katalytischen Menge an tertiärem Amin umgesetzt wird.

4. Verfahren gemäß Anspruch 3, wobei das tertiäre Amin ein chirales tertiäres Amin, das in der Synthese von dem Kondensationsreagenz verwendet wurde, ist.

## Revendications

1. Procédé d'obtention de produits de condensation énantiomériquement enrichis à partir d'acides racémiques ou d'acides de faible pureté énantiomérique dans lequel un acide racémique ou un acide de faible pureté énantiomérique est mis à réagir avec un réactif de condensation dans un solvant organique, de préférence à une température abaissée, et ensuite est soumis à la condensation avec un composant nucléophile, en particulier avec une amine, un alcool, ou un acide aminé, **caractérisé en ce que** le réactif de condensation utilisé est l'un des suivants:
- un N-triazinylammonium tétrafluoroborate chiral de formule 1 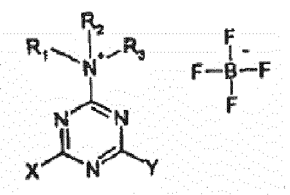
- un N-triazinylammonium bistétrafluoroborate chiral de formule 2 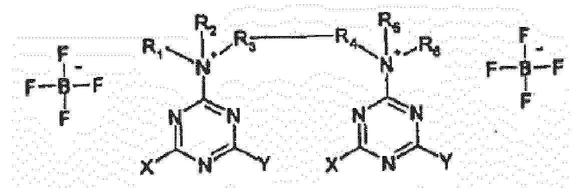 ou
- un N-triazinylammonium oligotétrafluoroborate chiral de formule 3 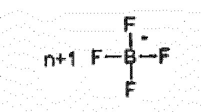 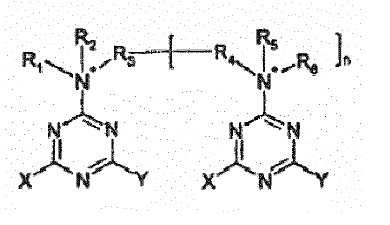
dans lequel
X et Y représentent indépendamment un groupe alcoxy, un groupe alcoxy substitué, un groupe aryloxy, un groupe aryloxy substitué, un groupe hétéroaryloxy, un groupe alkylamine, un groupe alkylamine substitué, un groupe dialkylamine, un groupe dialkylamine substitué, un groupe arylamine, un groupe arylamine substitué ou un substituant d'un groupe hétérocyclique; le substituant NR₁R₂R₃ représente un fragment dérivé d'une amine tertiaire chirale, dans lequel R₁, R₂, R₃ représentent indépendamment un groupe alkyle, cycloalkyle, bicycloalkyle, hétérocyclique, aryle ou hétéroaryle, substitué ou non substitué;
le substituent N₁R₂R₃-R₄R₅R₆ représente un fragment dérivé d'une diamine tertiaire chirale, dans lequel R₁, R₂, R₃, R₃, R₅, R₆ représentent indépendamment un groupe alkyle, cycloalkyle, bicycloalkyle, hétérocyclique, aryle ou hétéroaryle, substitué ou non substitué, et n représente un degré d'oligomérisation et n>2,
et dans lequel l'acide est utilisé en quantités molaires supérieure à la quantité molaire du réactif de condensation.

2. Procédé selon la revendication 1, dans lequel le réactif de condensation est un tétrafluoroborate chiral de formule 1 ou un bistétrafluoroborate chiral de formule 2.

3. Procédé selon la revendication 3 ou 2, dans lequel l'acide racémique ou un acide de faible pureté énantiomérique est mis à réagir avec un agent de condensation chiral en présence d'une quantité catalytique d'une amine tertiaire.

4. Procédé selon la revendication 3, dans lequel l'amine tertiaire est une amine tertiaire chirale qui a été utilisée dans la synthèse du réactif de condensation.
